Europäisches Patentamt

European Patent Office

Office européen des brevets

(19)

(11) Publication number: **0 015 248**
**B1**

(12) **EUROPEAN PATENT SPECIFICATION**

(45) Date of publication of patent specification: **27.07.83**

(51) Int. Cl.³: **B 23 B 31/04**

(21) Application number: **80850012.8**

(22) Date of filing: **25.01.80**

(54) Mounting device for rotary-cutter tools.

(30) Priority: **07.02.79 SE 7901061**

(43) Date of publication of application:
**03.09.80 Bulletin 80/18**

(45) Publication of the grant of the patent:
**27.07.83 Bulletin 83/30**

(84) Designated Contracting States:
**DE FR GB IT**

(56) References cited:
**CH - A - 362 294**
**DE - A - 2 056 683**
**DE - A - 2 454 146**
**DE - A - 2 541 123**
**DE - C - 716 923**
**FR - A - 1 356 461**
**FR - A - 1 539 432**
**GB - A - 1 191 297**
**US - A - 3 443 819**

(73) Proprietor: **SANDVIK AKTIEBOLAG**
**S-811 81 Sandviken 1 (SE)**

(72) Inventor: **Andersson, Ken Göte Eskil**
**Sörbyvägen 27**
**S-810 22 Arsunda (SE)**

(74) Representative: **Taquist, Lennart et al,**
**Sandvik AB Patents & Licences Fack**
**S-811 81 Sandviken 1 (SE)**

Courier Press, Leamington Spa, England

## Mounting device for rotary cutting tools

The present invention relates to a mounting device for connecting a rotary cutting tool to a machine spindle, comprising an arbor for connection to the spindle and an adapter for connecting the cutting tool to the arbor. The invention also relates to an adapter and an arbor designed to be used in the mounting device.

Chip cutting tools such as drills and milling cutters are usually connected to their spindles by means of some kind of chuck or mounting device, one end portion of which is machine oriented and the other end of which being tool oriented.

A very large number of various mounting devices are previously known which often are designed to match perfectly with a specific type of tool.

DE—C—1552556 discloses a mounting device comprising a conical arbor and an adapter for the connection of a cutting tool to a machine spindle. The arbor is formed with two sections of different diameters for fitting with corresponding guide surfaces on the adapter. The arbor is partly surrounded by the adapter, which is connected to the arbor by means of two separate flanges threadedly engaged with each other which surround a flange portion of the adapter whilst being secured to the machine spindle. No means for the supply of coolant to the cutting tool is provided in connection therewith.

FR—A—1356461 discloses a mounting device for the connection of a rotary cutting tool to a machine spindle by means of a clamping bolt. In this device, however, the clamping bolt connects the adapter to the arbor rather than to the tool.

It is an object of the invention to provide a simplified mounting device of two-piece structure that occupies a minimum of space laterally.

Another object of the invention is to make possible effective coolant supply. These and other objects of the invention are attained by giving the invention the characterizing features stated in the appending claims.

The invention is described in detail in the following with reference to the accompanying drawings in which one embodiment is shown by way of example. It is to be understood that this embodiment is only illustrative of the invention and that various modifications thereof may be made within the scope of the claims.

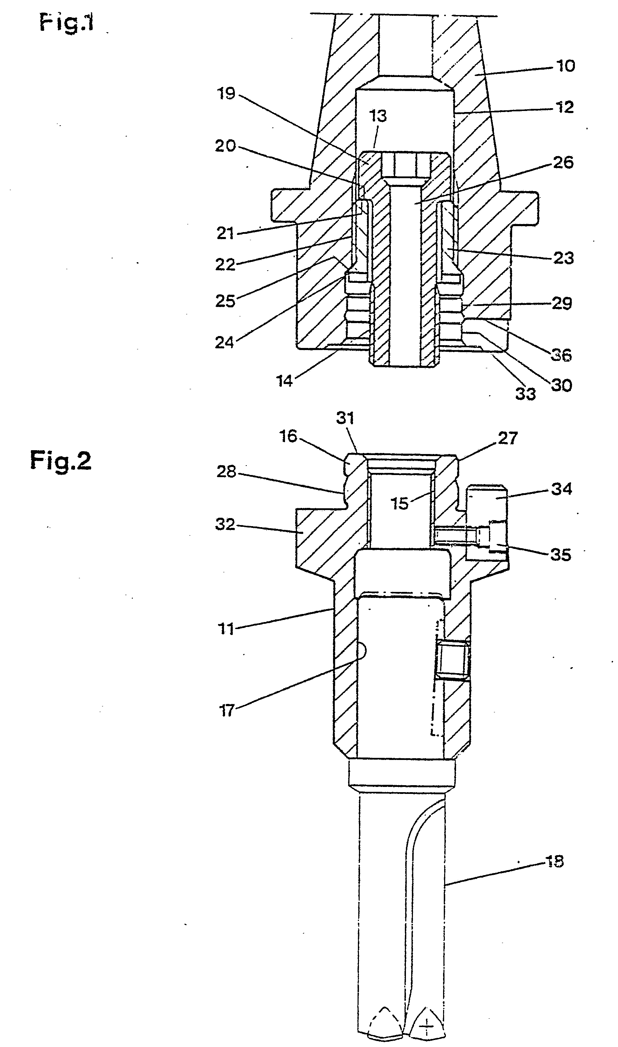

In the drawings, Fig. 1 is an axial sectional view of the arbor member of the mounting device, and

Fig. 2 is an axial sectional view of the adapter showing also a rotary-cutter tool entered thereinto.

Referring now to Figs 1—2 of the drawing, there is shown an arbor 10 and a tool adapter 11. The arbor 10 has a bore 12 extending centrally therethrough, the upper portion of which is connectible with the machine spindle by means of a threaded bolt (not shown). The lower portion of the bore 12 is enlarged and receives a clamping bolt 13 which at its lower end portion has an external thread 14 adapted to engage a corresponding internal thread 15 of an axially extending cylindrical centering portion 16 of the adapter 11, which is to be received in a corresponding portion of the bore 12 upon clamping. The internally threaded portion 15 of the adapter 11 provides the upper portion of a central bore extending through the adapter, the lower portion 17 of said bore being adapted to receive a rotary cutting tool 18 which is a drill.

The clamping bolt 13 is axially fixed in the bore 12 by the provision of an annular abutment surface 20 on the underneath side of the head 19 of the bolt oriented perpendicular to the axis of said bolt and intended for abutment against the upper end surface 21 of a sleeve member 23, that is threadably engaged at 22 into the above related enlarged portion of the bore 12. The lower end portion of said sleeve member 23 is a flange portion 24 adapted to engage with a correspondingly shaped shoulder abutment 25. The clamping bolt 13 is furthermore dimensioned such as to admit the provision of an axial bore 26 extending centrally therethrough for the supply of coolant medium to the rotary cutting tool 18 supported by the adapter.

The axially extending centering portion 16 of the adapter 11 is provided with two cylindrical portions 27 and 28 of differing diameters intended to be used as peripheral guiding surfaces. The upper surface 27 in Fig. 2 has a slightly less diameter than the axially rear surface 28, both said surfaces being intended upon mounting to slide with a close interfit against corresponding guide surfaces 29 and 30 respectively provided at the lower portion of the bore 12. The end surface 31 of the axial centering portion 16 is radially extending. The adapter 11 is furthermore provided with a radial flange 32 located behind said centering portion 16 which is adapted to abut against the lower end surface of the arbor 10 in order to reach an axially fixed position.

The dimensioning and formation of the centering portion 16 is such that the internal threaded portion 15 thereof and correspondingly threaded portion 14 of the clamping bolt 13 extend in length substantially in excess of the total length of guiding surfaces 27, 28.

This improves the moment stability when mounting the adapter 11 into the arbor 10, at the same time as the centrally located clamping bolt 13 gives a high clamping force in the mounting which stabilizes the conditions. The function of the centering portion 16 is to reach a tool without clearances and additionally minimize radial offsetting of the cutting tool. The

maintenance of these conditions requires that the interfit is made rather accurate which hitherto has caused jamming conditions for the cutting tools upon the mounting thereof. Due to the provision of a centering portion composed of sections of various diameters it has been found that any jamming can be almost entirely avoided.

According to the invention, thus, the mounting device comprises a machine oriented member, i.e. the arbor 10, and a tool oriented member, i.e. the adapter 11, that provide for a very good precision for the rotary cutting tool 18 to be entered thereinto. The effective supply of coolant to the cutting tool is simultaneously achieved by the provision of the centrally apertured clamping bolt 13, which is arranged to hold the cutting tool. When it is desirable to change diameters of the cutting tool only the tool oriented member 11 of the mounting device needs to be exchanged which enables a reduction of costs.

The adapter 11 is secured against rotation relative to the arbor by means of a wedge 34 receivable in the radial flange portion 32, said wedge being connected to the adapter by means of a radial bolt 35 and adapted to be received in a complementary wedging slot 36 within the arbor 10.

The advantage of providing a wedge 34 that is mounted on the tool that is being rotated i.e. the adapter 11, instead of mounted on the member that causes rotation, i.e. the arbor, is the fact that the wedge supporting member is the member that can be easiest damaged if the tooling structure collapses. Usually the adapter is provided with wedge means also at its tool oriented end portion which also are susceptible to damage. If the wedge 34 is provided in the adapter 11 those members easiest susceptible to damages will be located on the same member. This substantially lessens the risk of tool failure and enables reduction of costs. The adapter 11 is furthermore provided with only one wedge 34 which enables mounting of the arbor to be effected in only one manner which is an advantage since working with single cutting tools in tooling center is absolutely necessary for exact knowledge of the position of the cutting edge in relation to the keying members of the machine spindle.

## Claims

1. A mounting device for the connection of a rotary cutting tool (18) to a machine spindle, comprising an arbor (10) for connection to the spindle, an adapter (11) for connecting the cutting tool (18) to the arbor (10) and having a cylindrical extension (16) extending from its main portion, a clamping bolt (13) for clamping the adapter (11) to the arbor (10) and having an exterior threaded portion (14) at its tool oriented end portion for threadable engagement with a corresponding internal thread portion (15) located at least partially within said cylindrical extension (16), characterized in that the cylindrical extension (16) has two cylindrical surface portions (27, 28) of different diameters, the distal surface portion (27) having a smaller diameter than the other surface portion (28), the bore (12) of the arbor (10) having two guide surfaces (29, 30) which fit closely against the two cylindrical surface portions (27, 28), and in that the clamping bolt (13) has an axial central bore (26) for the transmission of coolant medium therethrough and serves to clamp the adapter (11) directly to the arbor (10) so as to form a unit separable from the spindle.

2. Mounting device according to claim 1, wherein the clamping bolt (13) is supported on a sleeve member (23) threadably engaged with the interior wall of the bore (12) in said arbor (10), the underneath surface (20) of the head (19) of the bolt extending perpendicularly to the axis of said bolt and adapted to be supported against the upper end surface (21) of said sleeve member (23).

3. Mounting device according to claim 2, wherein the tool oriented end of the sleeve member (23) is provided with a radial flange (24) which is adapted to axially abut against a corresponding shoulder abutment (25) in the bore (12) of the arbor (10).

4. Mounting device according to any of the preceding claims, further comprising a wedge on the adapter (11) for preventing relative rotation between the arbor (10) and said adapter.

5. Mounting device according to any of the preceding claims, wherein the internal thread portion (15) of the adapter (11) and the corresponding external thread portion (14) of the clamping bolt (13) each has an axial length in excess of the total length of the cylindrical extension (16) of said adapter.

6. Mounting device according to any of the preceding claims, further comprising front and rear stop means for abutting the head (19) of the clamping bolt (13), said stop means permitting limited axial movement of the clamping bolt (13) relative to the arbor (10).

7. Mounting device according to claim 6, wherein the clamping bolt (13) extends beyond the guide surfaces (29, 30) when the head (19) of the bolt rests against the front stop means.

8. Adapter to be used in a mounting device according to claim 1, characterized in that the adapter (11) is provided with a cylindrical extension (16) adapted to be received in an arbor connected between a spindle and the adapter, said cylindrical extension having an internal thread portion (15) and two cylindrical surface portions (27, 28) of different diameters on the outside of said cylindrical extension, the upper surface having a smaller diameter than the lower surface, said surfaces being adapted to engage said arbor.

9. Arbor to be used in a mounting device according to claim 1, characterized in that the arbor (10) has an axial bore (12) and comprises a clamping bolt (13) arranged within said bore and having an exterior thread portion (14) at its tool oriented end adapted for threadable engagement with an adapter (11) which holds the cutter tool, said clamping bolt having an axial central bore (26) for the transmission of coolant medium therethrough, and further comprises two guide surfaces (29, 30) of different diameters within the bore of said arbor, the upper surface having a smaller diameter than the lower surface, said surfaces being adapted to engage said adapter.

**Revendications**

1. Dispositif de montage pour l'assemblage d'un outil de coupe rotatif (18) à un mandrin de machine, ce dispositif comprenant un arbre (10) destiné à être assemblé au mandrin, un raccord (11) destiné à solidariser l'outil de coupe (18) à l'arbre (10) et comportant un prolongement cylindrique (16) partant de sa partie principale, ainsi qu'un boulon de serrage (13) destiné à assujettir le raccord (11) à l'arbre (10) et comportant, à son extrémité orientée vers l'outil, une partie extérieure filetée (14) pouvant venir se visser sur une partie intérieure filetée correspondante (15) située au moins partiellement dans le prolongement cylindrique (16), caractérisé en ce que le prolongement cylindrique (16) comporte deux surfaces cylindriques (27, 28) ayant des diamètres différents, la surface distale (27) ayant un plus petit diamètre que l'autre surface (28), l'alésage (12) de l'arbre (10) comportant deux surfaces de guidage (29, 30) venant s'adapter avec un ajustage serré contre les deux surfaces cylindriques (27, 28), tandis que le boulon de serrage (13) comporte un alésage central axial (26) pour la transmission d'un milieu réfrigérant et a pour fonction de serrer le raccord (11) directement sur l'arbre (10), de façon à former une unité séparable du mandrin.

2. Dispositif de montage suivant la revendication 1, caractérisé en ce que le boulon de serrage (13) prend appui sur un manchon (23) venant se visser sur la paroi intérieure de l'alésage (12) de l'arbre (10), la surface inférieure (20) de la tête (19) de ce boulon s'étendant perpendiculairement à l'axe de ce dernier, tandis qu'elle est conçue pour venir appuyer contre la surface supérieure en bout (21) du machon (23).

3. Dispositif de montage suivant la revendication 2, caractérisé en ce que l'extrémité du manchon (23) qui est orientée vers l'outil, comporte une bride radiale (24) conçue pour venir buter axialement contre un épaulement correspondant (25) formé dans l'alésage (12) de l'arbre (10).

4. Dispositif de montage suivant l'une quelconque des revendications précédentes, caractérisé en ce qu'il comprend également une cale prévue sur le raccord (11) en vue d'empêcher ce dernier et l'arbre (10) de tourner l'un par rapport à l'autre.

5. Dispositif de montage suivant l'une quelconque des revendications précédentes, caractérisé en ce que la partie intérieure filetée (15) du raccord (11) et la partie extérieure filetée correspondante (14) du boulon de serrage (13) ont chacune une longueur axiale supérieure à la longueur totale du prolongement cylindrique (16) du raccord.

6. Dispositif de montage suivant l'une quelconque des revendications précédentes, caractérisé en ce qu'il comprend également des butées avant et arrière entrant en contact avec la tête (19) du boulon de serrage (13) et permettant un mouvement axial limité de ce dernier par rapport à l'arbre (10).

7. Dispositif de montage suivant la revendication 6, caractérisé en ce que le boulon de serrage (13) s'étend au-delà des surfaces de guidage (29, 30) lorsque sa tête (19) vient appuyer contre la butée avant.

8. Raccord destiné à être utilisé dans un dispositif de montage suivant la revendication 1, caractérisé en ce que ce raccord (11) comporte un prolongement cylindrique (16) conçu pour venir se loger dans une arbre monté entre un mandrin et ce raccord, ce prolongement cylindrique comportant une partie intérieure filetée (15) et deux surfaces cylindriques extérieures (27, 28) ayant des diamètres différents, la surface supérieure ayant un plus petit diamètre que la surface inférieure, ces surfaces étant conçues pour venir s'engager sur l'arbre.

9. Arbre destiné à être utilisé dans un dispositif de montage suivant la revendication 1, caractérisé en ce que cet arbre (10) comporte un alésage axial (12) dans lequel est disposé un boulon de serrage (13) comportant, à son extrémité orientée vers l'outil, une partie extérieure filetée (14) conçue pour venir se visser sur un raccord (11) qui maintient l'outil de coupe, ce boulon de serrage comportant un alésage central axial (26) pour la transmission d'un milieu réfrigérant, tandis que deux surfaces de guidage (29, 30) ayant des diamètres différents sont définies dans l'alésage de cet arbre, la surface supérieure ayant un plus petit diamètre que la surface inférieure, ces surfaces étant conçues pour venir s'engager sur le raccord.

**Patentansprüche**

1. Vorrichtung zum Befestigen eines drehenden Schneidwerkzeugs (18) an einer Maschinenspindel, bestehend aus einem Aufsteckdorn (10) zur Verbindung mit der Spindel, einem das Schneidwerkzeug (18) mit dem Aufsteckdorn (10) verbindenen Zwischenstück (11) mit einem von seinem Hauptteil vorstehenden zylindrischen Ansatz (16) sowie einem Spannbolzen (13) zum Aufspannen des Zwischenstücks (11) auf den Aufsteckdorn (10), wobei der Spannbolzen an seinem dem Werkzeug zugewandten Ende einen Teil (14) mit Aussengewinde zum Gewindeeingriff mit einem entsprechenden, mit Innengewinde versehenen, mindestens teilweise innerhalb jenes zylindrischen Ansatzes (16) gelegenen Teil (15) aufweist, dadurch gekennzeichnet, dass der zylindrische Ansatz (16) zwei zylindrische Oberflächenteile (27, 28) verschiedenen Durchmessers besitzt, wobei der äussere Oberflächenteil (27) einen kleineren Durchmesser als der andere Oberflächenteil (28) hat, wobei die Bohrung (12) des Aufsteckdorns (10) zwei Führungsflächen (29, 30) aufweist, die den beiden zylindrischen Oberflächenteilen (27, 28) dicht anliegen, und dass der Spannbolzen (13) eine axiale Zentralbohrung (26) zum Durchgang eines Kühlmediums besitzt und dazu dient, das Zwischenstück (11) direkt auf den Aufsteckdorn (10) unter Bildung einer von der Spindel abnehmbaren Einheit aufzuspannen.

2. Befestigungsvorrichtung nach Anspruch 1, worin sich der Spannbolzen (13) auf einem mit der Innenwand der Bohrung (12) in jenem Aufsteckdorn (10) in Gewindeeingriff stehenden Hülsenglied (23) abstützt, wobei sich die Unterfläche (20) des Kopfes (19) des Bolzens senkrecht zur Achse dieses Bolzens erstreckt und auf der oberen Endfläche (21) dieses Hülsenglieds (23) abstützbar ist.

3. Befestigungsvorrichtung nach Anspruch 2, worin das dem Werkzeug zugewandte Ende des Hülsenglieds (23) mit einem radialen Flansch (24) zum axialen Anschlag an einer entsprechenden Gegenschulter (25) in der Bohrung (12) des Aufsteckdorns (10) versehen ist.

4. Befestigungsvorrichtung nach einem der vorhergehenden Ansprüche, welche ferner auf dem Zwischenstück (11) einen Keil zur Verhinderung einer Relativdrehung zwischen dem Aufsteckdorn (10) und diesem Zwischenstück umfasst.

5. Befestigungsvorrichtung nach einem der vorhergehenden Ansprüche, worin der Innengewindeteil (15) des Zwischenstücks (11) und der entsprechende Aussengewindeteil (14) des Spannbolzens (13) je eine Axiallänge aufweisen, die grösser ist als die Gesamtlänge des zylindrischen Ansatzes (16) dieses Zwischenstücks.

6. Befestigungsvorrichtung nach einem der vorhergehenden Ansprüche, welche ferner Vorder- und Hinteranschläge zum Anschlag des Kopfes (19) des Spannbolzens (13) umfasst, wobei diese Anschläge eine begrenzte Axialbewegung des Spannbolzens (13) gegenüber dem Aufsteckdorn (10) zulassen.

7. Befestigungsvorrichtung nach Anspruch 6, worin sich der Spannbolzen (13) über die Führungsflächen (29, 30) hinaus erstreckt, wenn der Kopf (19) des Bolzens an dem Vorderanschlag anliegt.

8. Zwischenstück zur Verwendung in einer Befestigungsvorrichtung nach Anspruch 1, dadurch gekennzeichnet, dass das Zwischenstück (11) mit einem zylindrischen Ansatz (16) zur Aufnahme in einem zwischen einer Spindel und dem Zwischenstück verbundenen Aufsteckdorn versehen ist, wobei dieser zylindrische Ansatz einen Innengewindeteil (15) und auf seiner Aussenseite zwei zylindrische Oberflächenteile (27, 28) verschiedenen Durchmessers aufweist, wobei die obere Oberfläche einen kleineren Durchmesser also die untere Oberfläche hat und diese Oberflächen mit jenem Aufsteckdorn in Eingriff kommen.

9. Aufsteckdorn zur Verwendung in einer Befestigungsvorrichtung nach Anspruch 1, dadurch gekennzeichnet, dass der Aufsteckdorn (10) eine Axialbohrung (12) aufweist und einen Spannbolzen (13) umfasst, der in dieser Bohrung angeordnet ist und an seinem dem Werkzeug zugewandten Ende einen Aussengewindeteil (14) zum Gewindeeingriff mit einem das Schneidwerkzeug Halternden Zwischenstück (11) besitzt, wobei dieser Spannbolzen eine axiale Zentralbohrung (26) zum Durchgang eines Kühlmediums besitzt und ferner zwei Führungsflächen (29, 30) verschiedenen Durchmessers innerhalb der Bohrung dieses Aufsteckdorns aufweist, wobei die obere Oberfläche einen kleineren Durchmesser also die untere Oberfläche hat und diese Oberflächen mit jenem Zwischenstück in Eingriff kommen.

**0 015 248**

Fig.1

Fig.2